# EUROPEAN PATENT SPECIFICATION

(11) **EP 2 335 639 B1**
(45) Date of publication and mention of the grant of the patent: **16.04.2014**
(21) Application number: 09179341.4
(22) Date of filing: 15.12.2009
(51) Int. Cl.: A61C 8/00

(54) **Dental implant fixture mount-abutment**
Montagestütze für Zahnimplantat
Butée assemblée sur une fixation d'implant dentaire

(43) Date of publication of application: 22.06.2011
(73) Proprietor: AIDI Biomedical International, Taipei 110 (TW)
(72) Inventor: Hung, Wiliam Y. S., Claremont, CA 91711 (US)
(74) Representative: Lang, Christian

(56) References cited:
- EP-A1- 1 380 267
- EP-A2- 1 419 746
- WO-A1-03/030768
- WO-A2-2008/016917
- WO-A2-2009/054005
- FR-A1- 2 921 819
- US-A- 4 738 623
- US-A- 6 045 361
- US-A1- 2004 033 470
- US-A1- 2005 136 379
- US-A1- 2005 287 496
- US-A1- 2006 172 257

## Description

### Background of the Present Invention

### Field of Invention

The present invention relates to (1) a dental implant fixture mount-abutment (DIFMA), particularly to the DIFMA having (a) a fixture mount and (b) an abutment with internal (triangular, square, pentagonal or hexagonal) slots for a fixture mount driver to place a dental implant and the DIFMA simultaneously, (2) a ball impression screw (BIS) for making an impression immediately after implant surgery, and (3) a fixture mount driver having a latch type end/square type end, driver shank and body to torque a DIFMA by inserting into the driven channel of the DIFMA during placement of a dental implant and a DIFMA into alveolar bone.

### Description of Related Arts

Traditionally, a fixture mount (FM) has been used by most of dental implant systems to deliver and place dental implants. After the dental implant placed, the FM is removed from the dental implant and is discarded. Three to six months after the dental implant placed, a conventional impression coping and copping screw are used for the purpose of making an impression to fabricate a stone cast for restoration which is not only a time consuming process but a waste of material due to discarding the FM.

Therefore, in order to provide a dental restoration, dentists have to pay the cost of the FM, impression copping/copping screw, preformed or custom abutment, which can be expensive, time consuming and clinical inconvenience.

The new design of the DIFMA is compelling because it can reduce cost, improve patient comfort and reduce clinical chair time/treatment time. The present invention which is a new design can be used as a FM, impression copping, provisional abutment and/or permanent abutment. In other word, a device can be used for four (4) purposes. This new design includes a DIFMA, a BIS and a fixture mount driver.

The DIFMA can be used as a FM, impression copping, temporary and/or permanent abutment. The BIS can be placed on the top of the new designed DIFMA to secure the DIFMA immediately after the dental implant placed and impression can be made immediately after the dental implant surgery without waiting period to facilitate an immediate loading of restoration. Patients can receive the benefits of chewing function and esthetics, immediately after the dental implant surgery, without a waiting period of three to six months.

WO 2009/054005 A2 describes a dental implant system comprising a dental implant, a multifunctional component and an abutment screw. The multifunctional component has an upper portion for inserting the abutment screw, a middle portion and a lower portion having a hexagonal body for inserting the multifunctional component in the dental implant.

### Summary of the Present Invention

A main object of the present invention is to provide a DIFMA which is cost effective and is less expensive.

Another object of the present invention is to provide a DIFMA which reduces time of treatment (chair time).

Another object of the present invention is to provide a DIFMA which reduces waiting period of treatment (three to six months).

Another object of the present invention is to provide a DIFMA which can improve clinical convenience. (It is difficult to seat impression copping immediately after the dental implant surgery due to bleeding)

Another object of the present invention is to provide a DIFMA which can reduce office visits.

Another object of the present invention is to provide a DIFMA which facilitates/speeds the process of immediate loading for function and esthetic reasons.

Another object of the present invention is to provide a DIFMA which can increase patient comfort.

Another object of the present invention is to provide a BIS which provides additional surface for indentation/indexing can improves accuracy of impression.

Another object of the present invention is to provide a BIS which is cost effective and is less expensive.

Another object of the present invention is to provide a BIS which reduces time of treatment (chair time).

Another object of the present invention is to provide a BIS which can improve clinical convenience. (It is difficult to seat impression copping immediately after a dental implant surgery due to bleeding)

Another object of the present invention is to provide a BIS for making an impression immediately after the dental implant surgery.

Accordingly, in order to accomplish the above objects, the present invention provides a dental implant fixture mount-abutment as specified in claim 1.

Preferred embodiments are defined by the dependent claims.

These and other objectives, features, and advantages of the present invention will become apparent from the following detailed description, the accompanying drawings, and the appended claims.

### Brief Description of the Drawings

Fig. 1 is a perspective view of a dental implant fixture mount-abutment (DIFMA) according to a preferred embodiment of the present invention.
Fig. 2 is an exploded view illustrating a dental implant, a DIFMA, a bolt and a fixture mount driver for securing the abutment with the dental implant according to above preferred embodiment of the present invention.
Fig. 3 is a sectional view of the DIFMA according to above preferred embodiment of the present invention.
Fig. 4 is a perspective view of an alternative mode of the DIFMA according to above preferred embodiment of the present invention.
Fig. 5 is a section view of the alternative mode of the DIFMA according to above preferred embodiment of the present invention.
Fig. 6 is a perspective view of a ball impression screw (BIS) .
Fig. 7 is an exploded view illustrating a dental implant, a DIFMA and a BIS for securing the abutment with the dental implant according to above preferred embodiment of the present invention.
Fig. 8 is a connected view illustrating a dental implant, a DIFMA and a BIS for securing the abutment with the dental implant according to above preferred embodiment of the present invention.
Fig. 9 is a sectional view of a BIS.
Fig. 10 is a perspective view of an alternative mode of a BIS.

### Detailed Description of the Preferred Embodiment

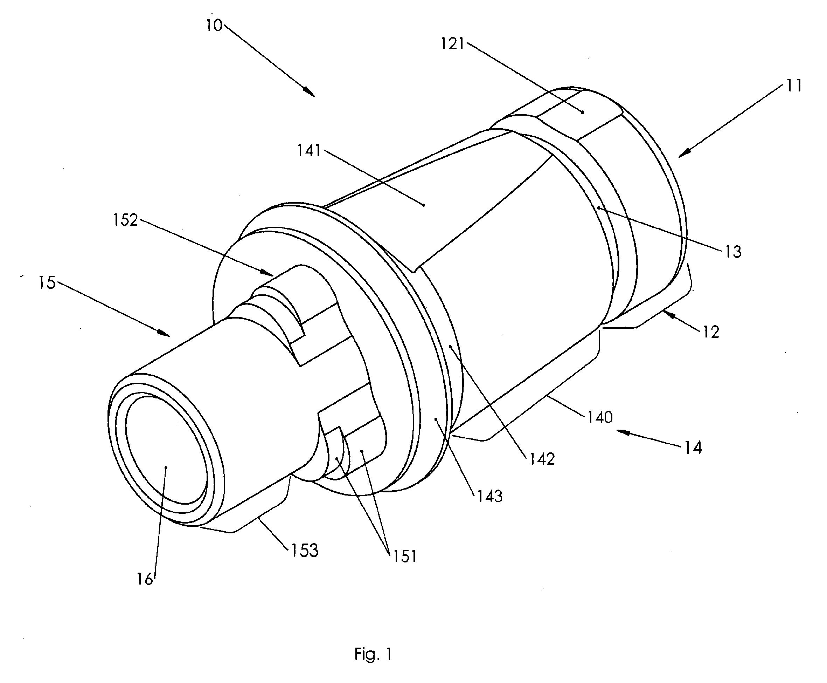

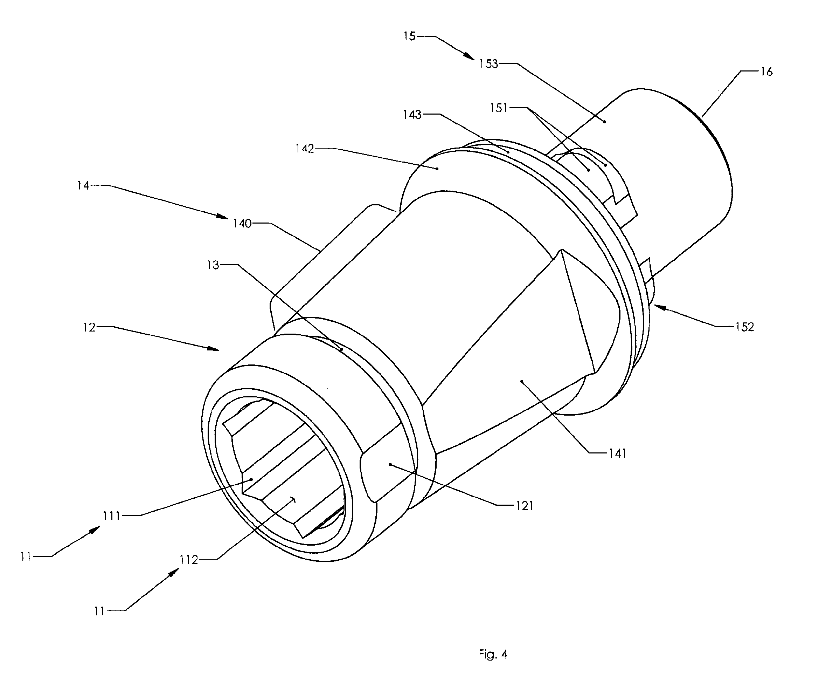

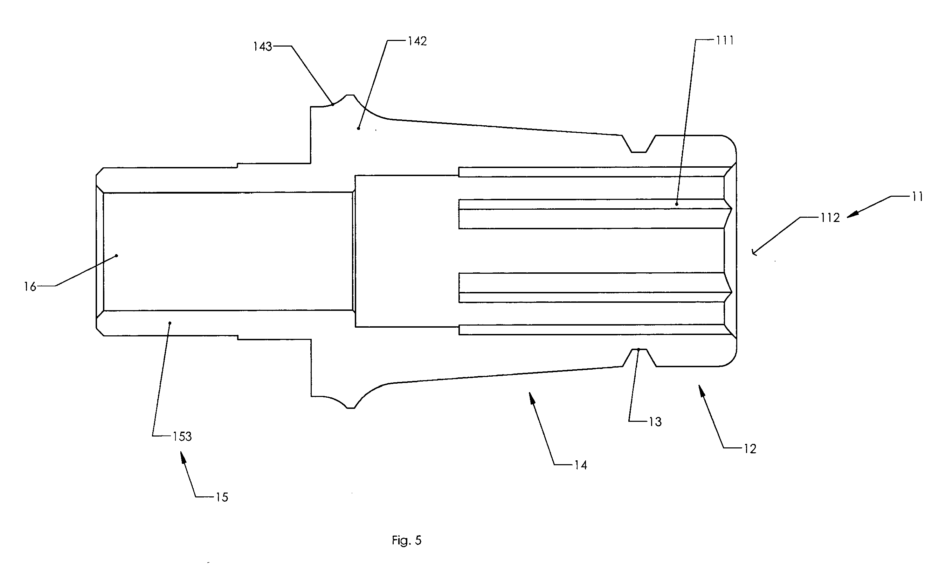

Referring to Figures 1 to 5 of the drawings, a dental implant fixture mount-abutment (DIFMA) 10 according to a preferred embodiment of the present invention is illustrated, wherein the DIFMA 10 comprises a fixture mount 12, which is a metal collar at a coronal end 11 for receiving a fixture mount driver 30, an abutment14, which is a tapered cylinder body 140, and a root 15, which is a cylinder body 153, for internally connecting to a dental implant 70 through a bolt 50. The bolt 50 is used to secure the DIFMA 10 and the dental implant 70 before using the fixture mount driver 30.

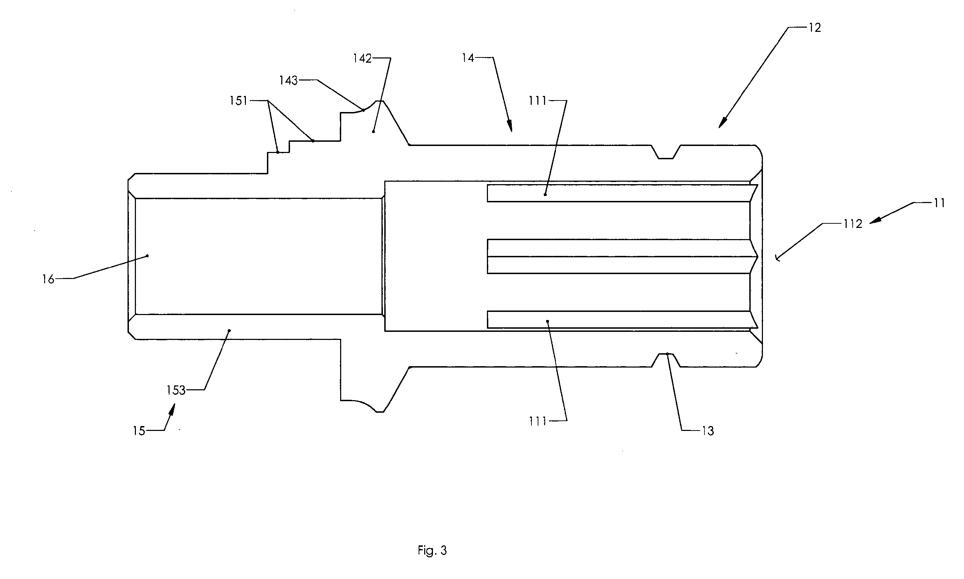

The fixture mount 12 is a 2 to 7 mm coronal extension/metal collar delineated from the abutment portion 14 separated by a circumferential groove 13. The fixture mount 12 is designed to extend the DIFMA 10 with the addition of the ball impression screw (BIS) 90 to serve as an impression coping for closed tray technique. The abutment 14 can be used as a temporary abutment after the fixture mount 12 is removed by a lab disk. The circumferential groove 13 is also designed to serve as an impression coping retentive feature. As illustrated in the cross sectional view of Fig. 3, a driven channel 112 of the coronal end 11 of the DIFMA 10 is designed to receive the fixture mount driver 30.

The fixture mount 12 has two small flat facets 121, located at opposite sites of the fixture mount 12, extending between the coronal end 11 and the circumferential groove 13. The abutment 14 has a tapered cylinder body 140 with two large flat facets 141, located at opposite sites of the abutment 14, extending between the circumferential groove 13 and the shoulder 142. The small flat facets 121 and the large flat facets 141 enable the DIFMA 10 to provide an anti-rotation feature for crown restoration.

Referring to Fig. 3, the DIFMA 10 has a shoulder 142 on the abutment portion 14. The shoulder 142 is designed to seat the margin of a crown restoration. A circumferential curvature 143 apically located to the shoulder 142 is designed to avoid engaging alveolar bone so as to be easily removed later.

Referring to Fig. 1, the root 15 of the DIFMA 10 is a male connector for internally connecting to the dental implant 70. The root 15 is designed to be inserted into the dental implant 70 and the root 15 is fit to an internal channel 71 of the dental implant 70. The diameter of the abutment 14 and the root 15 varies according to different sizes of the dental implant 70.

The root 15 of the DIFMA 10 has three engaging jaws 152 protruding from the root 15. Each of jaw 152 has two stairs 151. The three jaws 152 of the root 15 are located between the circumferential curvature 143 and a cylinder body 153 of the root 15 and are located 120° apart from each other and adapted to engage the internal channel 71 in the dental implant 70. The jaws 152 are designed to provide anti-rotation and friction to stabilize the DIFMA 10 with the dental implant 70 by inserting into the female slots of the dental implant 70. When the engaging jaws 152 are inserted and engaged in the internal channel 71 of the dental implant 70, the position of the DIFMA 10 is secured and the rotation of the DIFMA 10 is prevented.

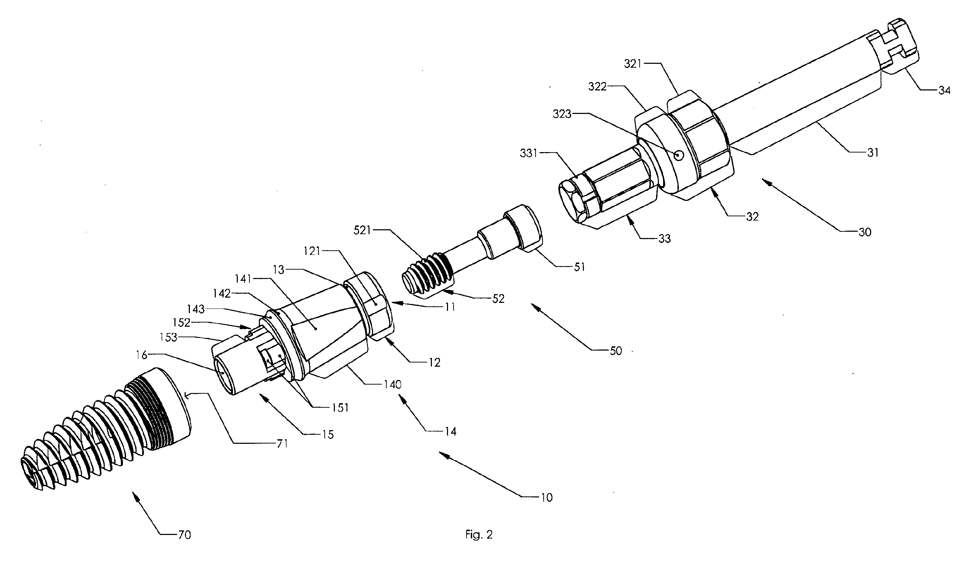

Referring to Fig. 2, the DIFMA 10 is fastened onto the dental implant 70 through the bolt 50. The DIFMA has a through hole 16 communicating the internal channel 71 of the dental implant 70.

Referring to Fig. 2, a tip 52 of the bolt 50 having an external thread 521 is adapted to pass through the through hole 16 of the DIFMA 10 and the internal channel 71 of the dental implant 70. A head 51 of the bolt 50 remains in the through hole 16 of the DIFMA 10 for driving the bolt 50 and retaining the abutment 14. In this manner, the bolt 50 and the dental implant 70 have a metal to metal contact which is very stable. This can steadily fasten the abutment 14 onto the dental implant 70. The stability is largely increased.

Referring to Figures 3 to 5 of the drawings, an internal hexagonal (triangular, square or pentagonal) slot 111 located at the internal wall of the DIFMA 10 is designed to receive the hexagonal (triangular, square or pentagonal) fixture mount driver 30. The length of the slots 111 can rang from 4mm to 8mm.

Referring to Fig. 2, the fixture mount driver 30, according to a preferred embodiment of the present invention are illustrated, wherein the fixture mount driver 30 comprises a shank 31, which is a cylinder body, a latch type end 34, for adapting to a slow speed hand piece, a hex body 32, having a upper hexagonal body 321 and a round lower body 322 with color coding 323 and a hex cylinder shank 33 with a plastic O ring 331 on the end to carry the DIFMA 10 and to place the dental implant 70.

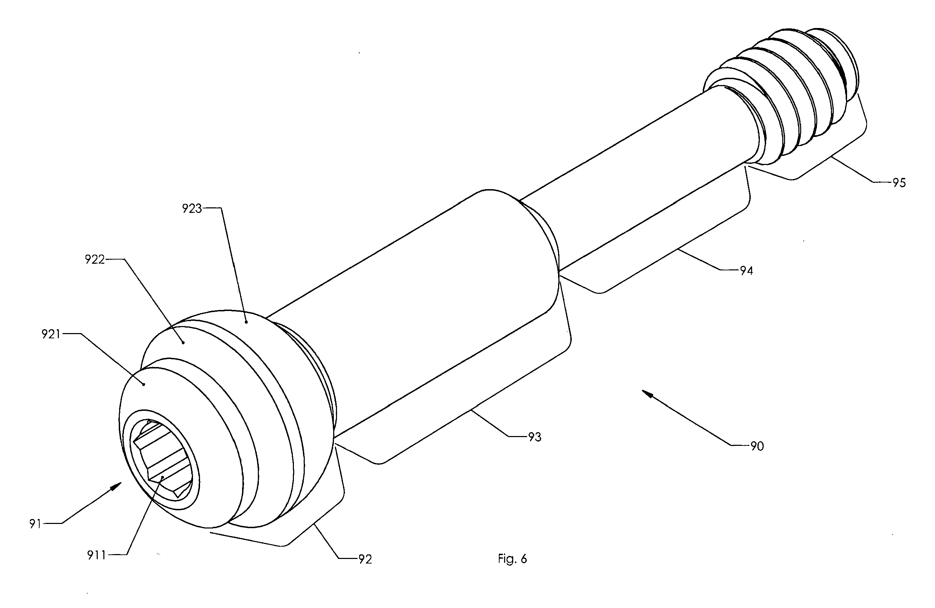

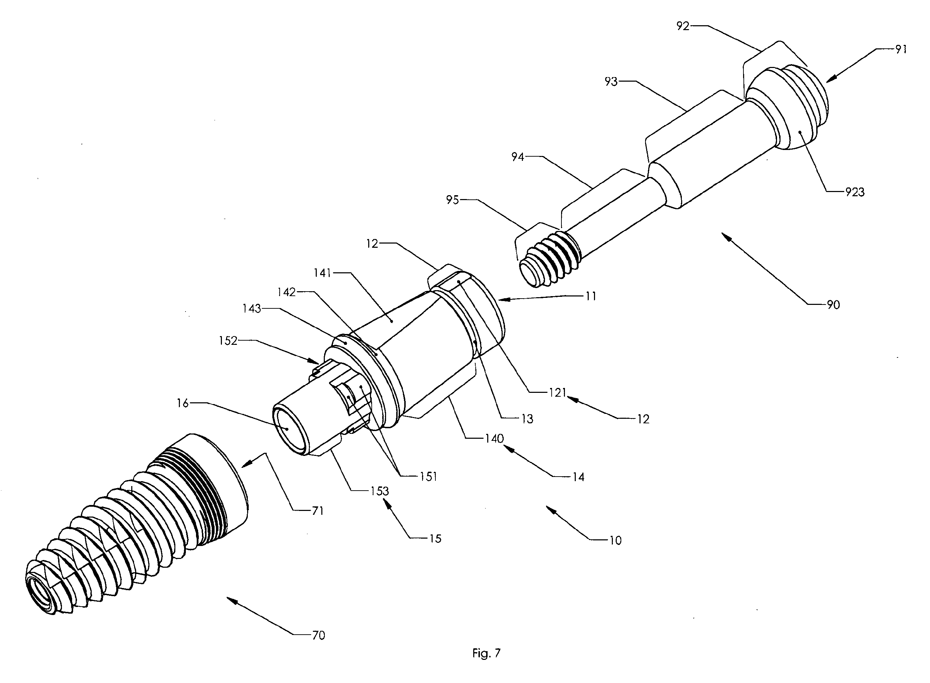

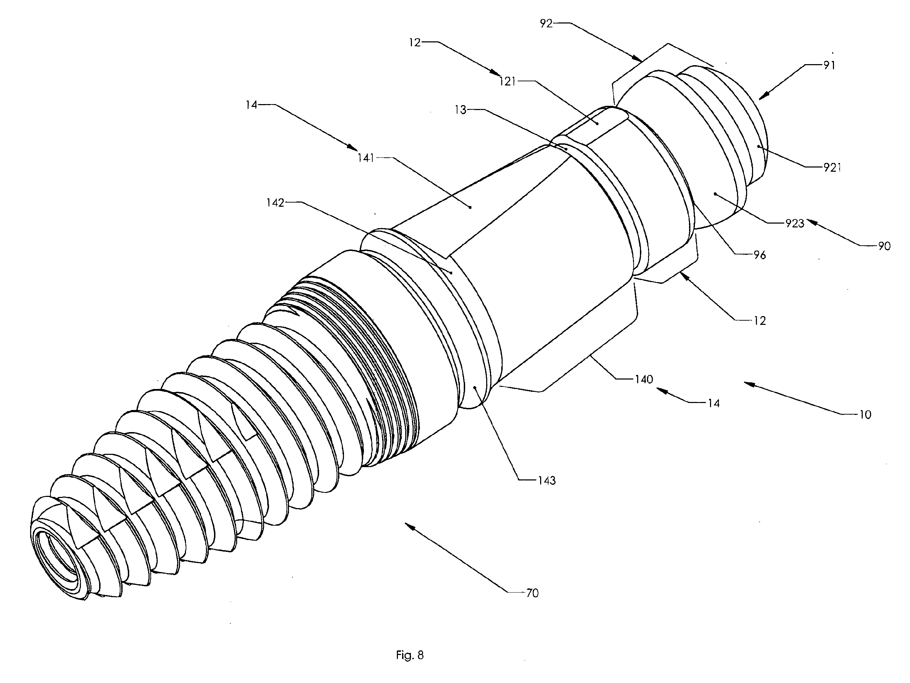

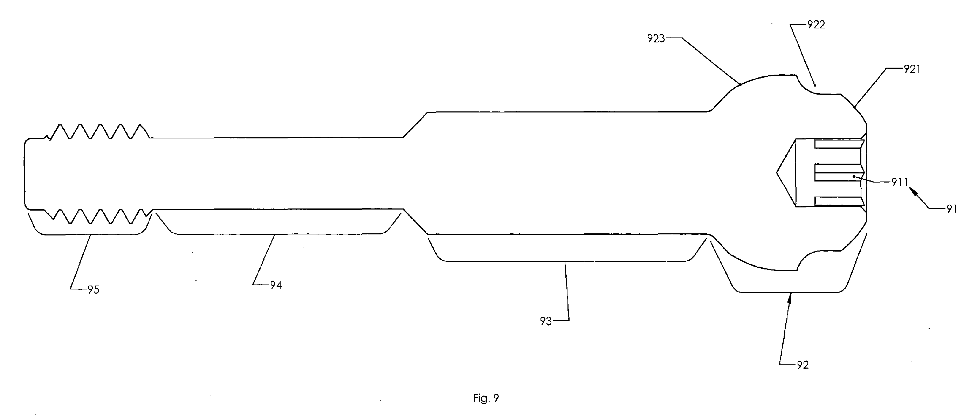

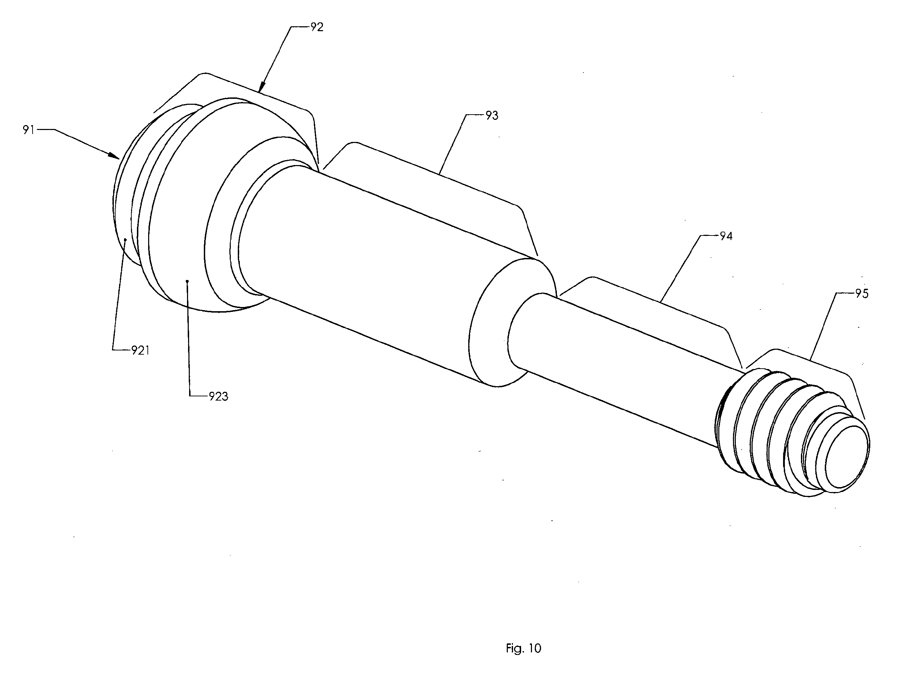

Referring to Figures 6 to 10 of the drawings, the ball impression screw (BIS) 90, according to a preferred embodiment of the present invention, is illustrated, wherein the BIS 90 comprises a dental implant ball impression screw bolt 94, which is a cylinder body, having the apical end 95 for inserting through the DIFMA 10 into the dental implant 70 and a dental implant ball impression screw shank 93, which is a cylinder body, having the coronal head 92 for providing additional retentive feature for the DIFMA 10 to serve as an impression coping.

After the dental implant 70 is placed, the fixture mount driver 30 and the bolt 50 used to fasten the DIFMA 10 onto the dental implant 70 are removed. Then, the BIS 90 is used to connect and fasten the DIFMA 10 onto the dental implant 70. A coronal head 92 of the BIS 90 remains outside of the driven channel 112 of the DIFMA 10.

Referring to Figures 6 to 9, the coronal head 92 of the shank 93 comprises a large hemisphere 923, a circumferential notch 922, a small hemisphere head 921 and a hexagonal concavity 91. The connection between the large hemisphere 923 and the fixture mount 12 will form a circumferential groove 96 to serve as an impression coping retentive feature. An internal hexagonal (or triangular, square, pentagonal) slot 911 of the hexagonal concavity 91 is made to receive the hexagonal (or triangular, square, pentagonal) fixture mount driver 30.

In summary, the DIFMA 10 specifically designed for the purpose of immediate implant placement and immediate impression taking was proposed. The new design employs several modern concepts in order not only to enhance the primary stability but also to provide multiple applications of an implant fixture mount. Utilizing the new designed DIFMA 10 coupled with the BIS 90, the clinician can take an immediate final impression right after implant placement. A cast can then be immediately poured for wax up and a screw-retained/cement retained provisional prosthesis is fabricated and delivered within the same day. A definitive prosthesis can be fabricated and delivered in a couple of days. Alternatively, an acrylic shell can be fabricated before the surgery and a provisional prosthesis can be fabricated and placed on the modified DIFMA 10 to be used as a temporary abutment at chair side right after the dental implant placement. The DIFMA 10 can also be modified and used as a permanent abutment.

One skilled in the art will understand that the embodiment of the present invention as shown in the drawings and described above is exemplary only and not intended to be limiting.

It will thus be seen that the objects of the present invention have been fully and effectively accomplished. It embodiments have been shown and described for the purposes of illustrating the functional and structural principles of the present invention and is subject to change without departure from such principles. Therefore, this invention includes all modifications encompassed within the scope of the following claims.

## Claims

1. A dental implant fixture mount-abutment (DIFMA) (10), comprising a fixture mount (12) being a 2 to 7 mm coronal extension and/or metal collar at a coronal end (11) for serving as an impression coping, temporary or permanent abutment and fixture mount (12), wherein internal slots (III) in said coronal end (11) are designed for receiving a fixture mount driver (30), wherein a driven channel (112) in said coronal end (11) is designed for receiving a ball impression screw (90), wherein said fixture mount (12) has two flat facets (121) located on opposite sides of the fixture mount (12) and extended between said coronal end (11) and circumferential groove (13), the DIFMA (10) further comprising an abutment (14) which is a taper cylinder body having a shoulder (142) and a circumferential curvature (143), wherein the shoulder (142) on the abutment portion is a part of the abutment (14), wherein the circumferential curvature (143) is designed to avoid engaging alveolar bone so as to be easily removed later, wherein said abutment (14) has two flat facets (141) located on opposite sides of the abutment (14) and extended between said circumferential groove (13) and shoulder (142), and wherein a root (15) of the DIFMA (10) having a cylinder body (153) is a male connector for internally connecting to the dental implant (70), wherein three engaging jaws (152), each of which has two stairs (151), protrude between the circumferential curvature (143) and the cylinder body (153) from the root (15) for inserting and engaging in the engaging slots (71) of the dental implant (70), and wherein said two stairs are adapted to be inserted into the engaging slots of the dental implant (70).

2. The DIFMA (10), as recited in claim 1, wherein said fixture mount (12) is designed to extend the DIFMA (10) configured like an impression coping.

3. The DIFMA (10), as recited in claim 1, wherein said internal slots (111) are hexagonal or triangular or square or pentagonal slots varying from 4mm to 8mm in length and are made to receive the hexagonal or triangular or square or pentagonal fixture mount driver (30).

4. The DIFMA (10), as recited in claim 1, wherein said abutment (14) is designed for closed tray technique with the addition of a ball impression screw (90) and/or said abutment (14) can be used as a temporary abutment after the fixture mount is removed by a lab disk.

5. The DIFMA (10), as recited in claim 1, wherein said two flat facets (141) of the abutment are designed to enable the DIFMA (10) to provide an anti-rotation feature and/or said shoulder (142) on the abutment (14) is made for seating a crown restoration.

## Patentansprüche

1. Montagestütze für Zahnimplantate (DIFMA) (10), die eine Befestigungshalterung (12) umfasst, die ein 2 bis 7 mm Kranzfortsatz und/oder Metallbund an einem Kranzende (11) ist, um als Abdruckkappe, zeitweilige oder permanente Stütze und als Befestigungshalterung (12) zu dienen, wobei interne Schlitze (111) in dem Kranzende (11) zum Aufnehmen eines Befestigungshalterungsbetätigers (30) ausgelegt sind, wobei ein Betätigungskanal (112) in dem Kranzende (11) zum Aufnehmen einer Kalottenschraube (90) ausgelegt ist, wobei die Befestigungshalterung (12) zwei Facetten (121) aufweist, die am gegenüberliegenden Seiten des Befestigungshalterung (12) angeordnet sind und sich zwischen dem Kranzende (11) und einer umlaufenden Nut (13) erstrecken, wobei die DIFMA (10) ferner eine Stütze (14) umfasst, die ein Kegelzylinderkörper mit einer Schulter (142) und einer umlaufenden Krümmung (143) ist, wobei die Schulter (142) an dem Stützbereich ein Teil der Stütze (14) ist, wobei die umlaufende Krümmung (143) darauf ausgelegt ist, einen Eingriff mit Alveolarknochen zu vermeiden, um später leicht entfernt zu werden, wobei die Stütze (14) zwei flache Facetten (141) aufweist, die an gegenüberliegenden Seiten der Stütze (14) angeordnet sind und sich zwischen der umlaufenden Nut (13) und der Schulter (142) erstrecken, wobei eine Wurzel (15) des DIFMA (10), die einen Zylinderkörper (153) aufweist, ein Stecker zur internen Verbindung mit dem Zahnimplantat (70) ist, wobei drei Eingriffsbacken (152), von denen jede zwei Stufen (151) aufweist, zwischen der umlaufenden Krümmung (141) und dem Zylinderkörper (153) von der Wurzel (15) hervorstehen, um in die Eingriffsschlitze (71) des Zahnimplantats (70) eingeführt zu werden und darin einzugreifen, und wobei die zwei Stufen darauf ausgelegt sind, in die Eingriffsschlitze des Zahnimplantats (70) eingeführt zu werden.

2. DIFMA (10) nach Anspruch 1, wobei die Befestigungshalterung (12) darauf ausgelegt ist, die DIFMA (10), die wie eine Abdruckkappe konfiguriert ist, zu verlängern.

3. DIFMA (10) nach Anspruch 1, wobei die internen Schlitze (111) hexagonale oder dreieckige oder quadratische oder fünfeckige Schlitze sind, die in der Länge von 4 mm bis 8 mm variieren, und hergestellt sind, um hexagonale oder dreieckige oder quadratische oder fünfeckige Befestigungshalterungsbetätiger (30) aufzunehmen.

4. DIFMA (10) nach Anspruch 1, wobei die Stütze (14) für die geschlossene Schalen - Technik mit zusätzlich einer Kalottenschraube (90) ausgelegt ist und/oder wobei die Stütze (14) als eine zeitweilige Stütze verwendet werden kann, nachdem die Befestigungshalterung mit einer Laborscheibe entfernt wurde.

5. DIFMA (10) nach Anspruch 1, wobei die zwei flachen Facetten (141) der Stütze darauf ausgelegt sind, es der DIFMA (10) zu ermöglichen, eine Antirotationseigenschaft bereitzustellen, und/oder wobei die Schulter (142) der Stütze (14) für das Halten einer Kronenrestauration ist.

## Revendications

1. Pilier porte-implant d'implant dentaire (10) comprenant un porte-implant (12) qui est une extension coronaire de 2 à 7 mm et/ou un collier métallique à une extrémité coronaire (11) pour servir de coiffe, de pilier temporaire ou permanent et de porte-implant (12), dans lequel des fentes internes (111) dans ladite extrémité coronaire (11) sont conçues pour recevoir un pilote de porte-implant (30), dans lequel un canal piloté (112) dans ladite extrémité coronaire (11) est conçu pour recevoir une vis d'empreinte à bille (90), dans lequel ledit porte-implant (12) a deux facettes plates (121) situées sur des côtés opposés du porte-implant (12) et qui s'étendent entre ladite extrémité coronaire (11) et la rainure circonférentielle (13), le pilier porte-implant d'implant dentaire (10) comprenant de plus un pilier (14) qui est un corps de cylindre conique qui a un épaulement (142) et une courbure circonférentielle (143), dans lequel l'épaulement (142) sur la portion de pilier est une partie du pilier (14), dans lequel la courbure circonférentielle (143) est conçue pour éviter de s'engrener avec l'os alvéolaire de manière à être enlevée facilement plus tard, dans lequel ledit pilier (14) a deux facettes plates (141) situées sur des côtés opposés du pilier (14) qui s'étendent entre ladite rainure circonférentielle (13) et l'épaulement (142) et dans lequel une racine (15) du pilier porte-implant d'implant dentaire (10) qui a un corps de cylindre (153) est un connecteur mâle pour la connexion de manière interne à l'implant dentaire (70), dans lequel trois mâchoires d'engrènement (152), dont chacune a deux marches (151), font saillie entre la courbe circonférentielle (143) et le corps de cylindre (153) de la racine (15) pour s'insérer et se mettre en prise dans les fentes d'engrénement (71) de l'implant dentaire (70) et dans lequel lesdites deux marches sont adaptées pour être insérées dans les fentes d'engrènement de l'implant dentaire (70).

2. Pilier porte-implant d'implant dentaire (10) selon la revendication 1 dans lequel le porte-implant (12) est conçu pour une extension du pilier porte-implant d'implant dentaire (10) configuré comme une coiffe d'empreinte.

3. Pilier porte-implant d'implant dentaire (10) selon la revendication 1 dans lequel lesdites fentes internes (111) sont hexagonales ou triangulaires ou carrées ou pentagonales variant de 4 mm à 8 mm de longueur et sont faites pour recevoir le pilote de porte-implant hexagonal ou triangulaire ou carré ou pentagonal (30).

4. Pilier porte-implant d'implant dentaire (10) selon la revendication 1 dans lequel ledit pilier (14) est conçu pour la technique du porte-empreinte fermé avec l'addition d'une vis d'empreinte à bille (90) et/ou ledit pilier (14) peut être utilisé comme pilier temporaire après que le porte-implant ait été enlevé par un disque de laboratoire.

5. Pilier porte-implant d'implant dentaire (10) selon la revendication 1 dans lequel lesdites deux facettes plates (141) du pilier sont conçues pour permettre au pilier porte-implant d'implant dentaire (10) de créer une fonction anti-rotation et/ou ledit épaulement (142) sur le pilier (14) est fait pour mettre en place une restauration de couronne.
